# EUROPEAN PATENT SPECIFICATION

(11) **EP 4 528 455 B1**
(45) Date of publication and mention of the grant of the patent: **02.12.2026**
(21) Application number: 23884546.5
(22) Date of filing: 08.10.2023
(51) Int. Cl.: G06F 3/01, G06F 3/038, G06F 3/0484, G06F 9/54, G06F 9/46, H04L 12/18

(54) **DEVICE INPUT METHOD AND SYSTEM, AND ELECTRONIC DEVICE AND STORAGE MEDIUM**
VORRICHTUNGSEINGABEVERFAHREN UND -SYSTEM SOWIE ELEKTRONISCHE VORRICHTUNG UND SPEICHERMEDIUM
PROCÉDÉ ET SYSTÈME D'ENTRÉE DE DISPOSITIF, DISPOSITIF ÉLECTRONIQUE ET SUPPORT DE STOCKAGE

(30) Priority: 31.10.2022 CN 202211345200
(43) Date of publication of application: 26.03.2025
(73) Proprietor: Huawei Technologies Co., Ltd., Shenzhen, Guangdong 518129 (CN)
(72) Inventor: ZHANG, Chuang, Shenzhen, Guangdong 518129 (CN); TANG, Fan, Shenzhen, Guangdong 518129 (CN); LI, Gang, Shenzhen, Guangdong 518129 (CN); ZHANG, Bin, Shenzhen, Guangdong 518129 (CN)
(74) Representative: Gill Jennings & Every LLP
(86) International application number: PCT/CN2023/123377
(87) International publication number: WO 2024/093614

(56) References cited:
- CN-A- 115 033 295
- CN-A- 115 033 295
- CN-A- 115 185 441
- US-A1- 2014 279 531
- US-A1- 2019 066 060
- US-A1- 20250 053 650

## Description

### TECHNICAL FIELD

This application relates to the communication field, and in particular, to a device input method and system, an electronic device, and a storage medium.

### BACKGROUND

With rapid development of communication technologies, an increasing quantity of electronic devices enrich people's life. In daily life, one user usually has a plurality of types of electronic devices, for example, a mobile phone, a tablet, and a wearable device. However, as application scenarios of peripheral cooperation interconnection of electronic devices increase, input manners of various electronic devices also increase. For example, an input may be performed by using a mouse, a keyboard, a touchscreen, or a touchpad.

However, currently, when the user performs an input on an electronic device by using a peripheral, the device input can be implemented only on a single device, and the device input cannot be simultaneously implemented on a plurality of devices. For example, if the user expects to transfer a file in a device A to a device B, currently, the user can only operate the device A first and then operate the device B to implement file transfer between the device A and the device B, and cannot simultaneously operate the device A and the device B to implement file transfer between the device A and the device B.

US 2014/279531 A1 discloses a system and a method for a financial transaction between mobile devices. CN 115033295 A discloses a peripheral control method, in which an electronic device can create a peripheral agent corresponding to other electronic devices according to obtained peripheral information.

### SUMMARY

This application provides a device input method and system, an electronic device, and a storage medium, to effectively implement a combination input of a user on a plurality of devices.

According to a first aspect, this application provides a device input method according to claim 1.

In this application, an input event that is broadcast by a peer device is received, and a decision is made based on an input event of the device and the received input event of the peer device, to determine a multi-device input event. This can implement an operation in a multi-device input event scenario.

In a possible implementation, the method further includes:
receiving a device identifier that is broadcast by the second device, where the device identifier of the second device represents an identity of the second device, and the device identifier of the second device corresponds to the native event of the second device.

In a possible implementation, the method further includes:
receiving an event type and/or event coordinates that are broadcast by the second device, where the event type and/or the event coordinates of the second device correspond to the native event of the second device, the event type of the second device represents an input manner of the user on the second device, and the event coordinates of the second device represent coordinates corresponding to an input of the user on the second device.

In a possible implementation, the method further includes: broadcasting the native event of the first device.

In a possible implementation, the method further includes:
broadcasting a device identifier of the first device, where the device identifier of the first device represents an identity of the first device, and the device identifier of the first device corresponds to the native event of the first device.

In a possible implementation, the method further includes:
broadcasting an event type and/or event coordinates of the first device, where the event type and/or the event coordinates of the first device correspond to the native event of the first device, the event type of the first device represents an input manner of the user on the first device, and the event coordinates of the first device represent coordinates corresponding to an input of the user on the first device.

In a possible implementation, this application provides a device input method according to claim 7.

In this application, an input event of the user is broadcast, so that a peer device can make a decision based on an input event of the peer device and the received input event, to determine a multi-device input event. This can implement an operation in a multi-device input event scenario.

In a possible implementation, the method further includes:
broadcasting a device identifier of the second device, where the device identifier of the second device represents an identity of the second device, and the device identifier of the second device corresponds to the native event of the second device.

In a possible implementation, the method further includes:
broadcasting an event type and/or event coordinates of the second device, where the event type and/or the event coordinates of the second device correspond to the native event of the second device, the event type of the second device represents an input manner of the user on the second device, and the event coordinates of the second device represent coordinates corresponding to an input of the user on the second device.

In a possible implementation, the method further includes:
receiving a native event that is broadcast by a first device, where the native event of the first device is generated by an input operation performed by the user on the first device, and the first device and the second device are in a same distributed system;
virtualizing the native event of the first device into an agent event;
determining, based on the native event and the agent event of the second device, whether an input of the user is a multi-device combination input;
if determining that the input of the user is a multi-device combination input, determining whether the second device is an execution device; and
if determining that the second device is an execution device, executing a service corresponding to a multi-device combination input event.

In a possible implementation, the determining, based on the native event and the agent event of the second device, whether an input of the user is a multi-device combination input includes:
matching a combination of the native event and the agent event of the second device with a preset multi-device combination input scenario set, to determine whether the input of the user is a multi-device combination input, where the preset multi-device combination input scenario set includes one or more preset multi-device combination input scenarios, and each preset multi-device combination input scenario includes a plurality of events.

According to a comparative example, this application provides a device input apparatus, applied to a first device. The apparatus includes:
an obtaining module, configured to obtain a native event of the first device in response to an input operation performed by a user on the first device;
a receiving module, configured to receive a native event that is broadcast by a second device, where the native event of the second device is generated by an input operation performed by the user on the second device, and the second device and the first device are in a same distributed system;
a virtualization module, configured to virtualize the native event of the second device into an agent event;
an identification module, configured to determine, based on the native event and the agent event of the first device, whether an input of the user is a multi-device combination input; and
an execution module, configured to: if determining that the input of the user is a multi-device combination input, determine whether the first device is an execution device; and if determining that the first device is an execution device, execute a service corresponding to the multi-device combination input event.

In a possible implementation, the identification module is specifically configured to match a combination of the native event and the agent event of the first device with a preset multi-device combination input scenario set, to determine whether the input of the user is a multi-device combination input, where the preset multi-device combination input scenario set includes one or more preset multi-device combination input scenarios, and each preset multi-device combination input scenario includes a plurality of events.

In a possible implementation, the receiving module is further configured to receive a device identifier that is broadcast by the second device, where the device identifier of the second device represents an identity of the second device, and the device identifier of the second device corresponds to the native event of the second device.

In a possible implementation, the receiving module is further configured to receive an event type and/or event coordinates that are broadcast by the second device, where the event type and/or the event coordinates of the second device correspond to the native event of the second device, the event type of the second device represents an input manner of the user on the second device, and the event coordinates of the second device represent coordinates corresponding to an input of the user on the second device.

In a possible implementation, the apparatus further includes:
a broadcasting module, configured to broadcast the native event of the first device.

In a possible implementation, the broadcasting module is further configured to broadcast a device identifier of the first device, where the device identifier of the first device represents an identity of the first device, and the device identifier of the first device corresponds to the native event of the first device.

In a possible implementation, the broadcasting module is further configured to broadcast an event type and/or event coordinates of the first device, where the event type and/or the event coordinates of the first device correspond to the native event of the first device, the event type of the first device represents an input manner of the user on the first device, and the event coordinates of the first device represent coordinates corresponding to an input of the user on the first device.

According to a comparative example, this application provides a device input apparatus, applied to a second device. The apparatus includes:
an obtaining module, configured to obtain a native event of the second device in response to an input operation performed by a user on the second device; and
a broadcasting module, configured to broadcast the native event of the second device.

In a possible implementation, the broadcasting module is further configured to broadcast a device identifier of the second device, where the device identifier of the second device represents an identity of the second device, and the device identifier of the second device corresponds to the native event of the second device.

In a possible implementation, the broadcasting module is further configured to broadcast an event type and/or event coordinates of the second device, where the event type and/or the event coordinates of the second device correspond to the native event of the second device, the event type of the second device represents an input manner of the user on the second device, and the event coordinates of the second device represent coordinates corresponding to an input of the user on the second device.

In a possible implementation, the apparatus further includes:
a receiving module, configured to receive a native event that is broadcast by a first device, where the native event of the first device is generated by an input operation performed by the user on the first device, and the first device and the second device are in a same distributed system;
a virtualization module, configured to virtualize the native event of the first device into an agent event;
an identification module, configured to determine, based on the native event and the agent event of the second device, whether an input of the user is a multi-device combination input; and
an execution module, configured to: if determining that the input of the user is a multi-device combination input, determine whether the second device is an execution device; and if determining that the second device is an execution device, execute a service corresponding to the multi-device combination input event.

In a possible implementation, the identification module is specifically configured to match a combination of the native event and the agent event of the second device with a preset multi-device combination input scenario set, to determine whether the input of the user is a multi-device combination input, where the preset multi-device combination input scenario set includes one or more preset multi-device combination input scenarios, and each preset multi-device combination input scenario includes a plurality of events.

According to a second aspect, this application provides a first device, including a processor and a memory. The memory is configured to store a computer program, and the processor is configured to run the computer program to implement the device input method according to the first aspect.

In a possible implementation, this application provides a second device, including a processor and a memory. The memory is configured to store a computer program, and the processor is configured to run the computer program to implement the steps performed by the second device in the device input method according to claim 7.

According to a third aspect, this application provides a computer-readable storage medium. The computer-readable storage medium stores a computer program, and when the computer program is run on a computer, the computer is enabled to implement the steps performed by the first device in the device input method according to the first aspect.

According to a comparative example, this application provides a computer program. When the computer program is run on a processor of a first device, the first device is enabled to perform the device input method according to the first aspect.

In a possible design, the program in the above example may be all or partially stored in a storage medium that is encapsulated with a processor, or may be all or partially stored in a memory that is not encapsulated with a processor.

According to a fourth aspect, this application provides a device input system, including the first device according to the second aspect and a second device. The second device includes a processor and a memory. The memory is configured to store a computer program, and the processor is configured to run the computer program to implement the steps performed by the second device in the device input method according to claim 7.

### BRIEF DESCRIPTION OF DRAWINGS

FIG. 1 is a diagram of a hardware structure of an electronic device according to an embodiment of this application;
FIG. 2 is a diagram of a software structure of an electronic device according to an embodiment of this application;
FIG. 3 is a diagram of an event broadcasting procedure according to an embodiment of this application;
FIG. 4 is a diagram of an architecture of an application scenario according to an embodiment of this application;
FIG. 5 is a schematic flowchart of an embodiment of a device input method according to this application;
FIG. 6 is a diagram of a global coordinate system according to an embodiment of this application;
FIG. 7 is a diagram of an event identification procedure according to an embodiment of this application;
FIG. 8 is a diagram of a structure of an embodiment of a device input apparatus according to this application; and
FIG. 9 is a diagram of a structure of another embodiment of a device input apparatus according to this application.

### DESCRIPTION OF EMBODIMENTS

In embodiments of this application, unless otherwise specified, the character "/" indicates an "or" relationship between associated objects. For example, A/B may represent A or B. "And/or" describes an association relationship between associated objects, and indicates that three relationships may exist. For example, A and/or B may represent the following three cases: Only A exists, both A and B exist, and only B exists.

It should be noted that, terms such as "first" and "second" in embodiments of this application are merely used for distinction in description, and cannot be understood as an indication or implication of relative importance or an implicit indication of a quantity of indicated technical features, or an indication or implication of a sequence.

In embodiments of this application, "at least one" means one or more, and "a plurality of" means two or more. In addition, "at least one of the following items (pieces)" or a similar expression thereof means any combination of these items, including any combination of singular items (pieces) or plural items (pieces). For example, at least one item (piece) of A, B, or C may represent A, B, C, A and B, A and C, B and C, or A, B, and C. A, B, and C each may be an element, or may be a set that includes one or more elements.

In embodiments of this application, "example", "in some embodiments", "in another embodiment", and the like are used to represent giving an example, an illustration, or a description. Any embodiment or design scheme described as an "example" in this application should not be explained as being more preferred or having more advantages than another embodiment or design scheme. Exactly, the term "example" is used to present a concept in a specific manner.

In embodiments of this application, "of (of)", "corresponding (corresponding, relevant)", and "corresponding (corresponding)" may be interchangeably used sometimes. It should be noted that meanings expressed by the terms are consistent when differences are not emphasized. In embodiments of this application, communication and transmission may be interchangeably used sometimes. It should be noted that meanings expressed by the terms are consistent when differences are not emphasized. For example, transmission may include sending and/or receiving, and may be a noun or a verb.

In embodiments of this application, "equal to" may be used together with "greater than", and is applicable to a technical solution used in a case of "greater than"; or may be used together with "less than", and is applicable to a technical solution used in a case of "less than". It should be noted that when "equal to" is used together with "greater than", "equal to" cannot be used together with "less than"; and when "equal to" is used together with "less than", "equal to" cannot be used together with "greater than".

With rapid development of communication technologies, an increasing quantity of electronic devices enrich people's life. In daily life, a user usually has a plurality of types of electronic devices, for example, a mobile phone, a tablet, and a wearable device. However, as application scenarios of peripheral cooperation interconnection of electronic devices increase, input manners of various electronic devices also increase. For example, an input may be performed by using a mouse, a keyboard, a touchscreen, or a touchpad.

However, currently, when the user performs an input on an electronic device by using a peripheral, the device input can be implemented only on a single device, and the device input cannot be simultaneously implemented on a plurality of devices. For example, if the user expects to transfer a file in a device A to a device B, currently, the user can only operate the device A first and then operate the device B to implement file transfer between the device A and the device B, and cannot simultaneously operate the device A and the device B to implement file transfer between the device A and the device B.

Based on the foregoing problem, an embodiment of this application provides a device input method, applied to an electronic device. The electronic device may be a fixed terminal, for example, a notebook computer, a desktop computer, a large screen, a smart screen, a mouse, a keyboard, a remote sensing device, or a touchpad. The electronic device may also be a mobile terminal. The mobile terminal may also be referred to as user equipment (User Equipment, UE), a terminal device, an access terminal, a subscriber unit, a subscriber station, a mobile station, a mobile console, a remote station, a remote terminal, a mobile device, a user terminal, a terminal, a wireless communication device, a user agent, or a user apparatus. The mobile terminal may be a station (STATION, ST) in a WLAN; or may be a cellular phone, a cordless phone, a Session Initiation Protocol (Session Initiation Protocol, SIP) phone, a wireless local loop (Wireless Local Loop, WLL) station, a personal digital assistant (Personal Digital Assistant, PDA) device, a handheld device having a wireless communication function, a computing device or another processing device connected to a wireless modem, an in-vehicle device, an Internet of Vehicles terminal, a computer, a laptop computer, a handheld communication device, a handheld computing device, a satellite radio device, a wireless modem card, a television set top box (set top box, STB), customer premises equipment (customer premises equipment, CPE), and/or another device configured to perform communication in a wireless system, or a mobile terminal in a next-generation communication system like a 5G network, or a mobile terminal in a future evolved public land mobile network (Public Land Mobile Network, PLMN), or the like. Alternatively, the electronic device may be a wearable device. The wearable device may also be referred to as a wearable intelligent device, and is a general term of a wearable device that is intelligently designed and developed for daily wear by using a wearable technology, for example, glasses, gloves, a watch, clothing, and shoes.

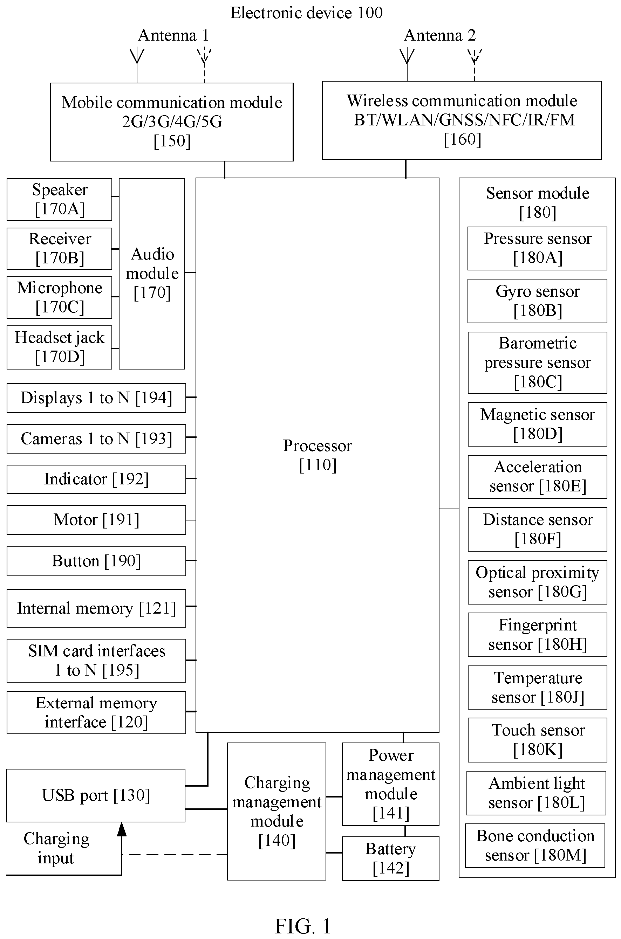

FIG. 1 first shows a diagram of an example of a structure of an electronic device 100.

The electronic device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in the description does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on an instruction operation code and a time sequence signal, to complete control of instruction fetch and instruction execution.

A memory may be further disposed in the processor 110, and is configured to store instructions and data. In some embodiments, the memory in the processor 110 is a cache memory. The memory may store an instruction or data that has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used to perform audio communication, and sample, quantize, and encode an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a two-way communication bus. The bus converts data to be transmitted between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component like the display 194 or the camera 193. The MIPI interface includes a camera serial interface (camera serial interface, CSI), a display serial interface (display serial interface, DSI), and the like. In some embodiments, the processor 110 communicates with the camera 193 via the CSI, to implement a photographing function of the electronic device 100. The processor 110 communicates with the display 194 via the DSI interface, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB port 130 is an interface that conforms to a USB standard specification, and may be specifically a mini USB port, a micro USB port, a USB type-C port, or the like. The USB port 130 may be configured to connect to a charger to charge the electronic device 100, or may be configured to transmit data between the electronic device 100 and a peripheral device, or may be configured to connect to a headset for playing audio through the headset. The port may alternatively be configured to be connected to another terminal device, for example, an AR device.

It may be understood that an interface connection relationship between the modules that is shown in this description is merely an example, and does not constitute a limitation on a structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB port 130. In some embodiments of wireless charging, the charging management module 140 may receive a wireless charging input through a wireless charging coil of the electronic device 100. While charging the battery 142, the charging management module 140 may further supply power to the terminal device by using the power management module 141.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G, 3G, 4G, 5G, and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 170A, the receiver 170B, or the like), or displays an image or a video by the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the electronic device 100, and that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave by the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global satellite positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite-based enhancement system (satellite based augmentation systems, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

The electronic device 100 may implement a photographing function through the camera 193, the ISP, the video codec, the GPU, the display 194, the application processor and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 may play back or record videos in a plurality of coding formats, for example, moving picture experts group (moving picture experts group, MPEG)-1, MPEG-2, MPEG-3, and MPEG-4.

The NPU is a neural-network (neural-network, NN) computing processor, and quickly processes input information by referring to a structure of a biological neural network, for example, a transfer mode between human brain neurons, and may further continuously perform self-learning. Applications such as intelligent cognition of the electronic device 100 may be implemented through the NPU, for example, image recognition, facial recognition, speech recognition, and text understanding.

The external memory interface 120 may be used to connect to an external storage card, for example, a micro SD card, to extend a storage capability of the electronic device 100. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The internal memory 121 may include a program storage area and a data storage area. The program storage area may store an operating system, an application required by at least one function (for example, a voice playing function or an image playing function), and the like. The data storage area may store data (such as audio data and an address book) created during use of the electronic device 100, and the like. In addition, the internal memory 121 may include a high-speed random access memory, or may include a nonvolatile memory, for example, at least one magnetic disk storage device, a flash memory, or a universal flash storage (universal flash storage, UFS). The processor 110 runs instructions stored in the internal memory 121 and/or instructions stored in the memory disposed in the processor, to perform various function applications and data processing of the electronic device 100.

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an electrical audio signal into a sound signal. The electronic device 100 may be used to listen to music or answer a call in a hands-free mode over the speaker 170A.

The receiver 170B, also referred to as an "earpiece", is configured to convert an electrical audio signal into a sound signal. When a call is answered or speech information is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, to implement a directional recording function and the like.

The headset jack 170D is configured to connect to a wired headset. The headset jack 170D may be the USB port 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch location based on a detection signal of the pressure sensor 180A. In some embodiments, touch operations that are performed in a same touch position but have different touch operation intensity may correspond to different operation instructions. For example, when a touch operation whose touch operation intensity is less than a first pressure threshold is performed on a messaging application icon, an instruction for viewing an SMS message is performed. When a touch operation whose touch operation intensity is greater than or equal to the first pressure threshold is performed on the messaging application icon, an instruction for creating a new SMS message is performed.

The gyro sensor 180B may be configured to determine a moving posture of the electronic device 100. In some embodiments, an angular velocity of the electronic device 100 around three axes (namely, axes x, y, and z) may be determined through the gyro sensor 180B. The gyro sensor 180B may be configured to implement image stabilization during photographing. For example, when the shutter is pressed, the gyro sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyro sensor 180B may also be used in a navigation scenario and a somatic game scenario.

The barometric pressure sensor 180C is configured to measure barometric pressure. In some embodiments, the electronic device 100 calculates an altitude through the barometric pressure measured by the barometric pressure sensor 180C, to assist in positioning and navigation.

The magnetic sensor 180D includes a Hall sensor. The electronic device 100 may detect opening and closing of a flip cover by using the magnetic sensor 180D. In some embodiments, when the electronic device 100 is a clamshell phone, the electronic device 100 may detect opening and closing of a flip cover based on the magnetic sensor 180D. Further, a feature like automatic unlocking of the flip cover is set based on a detected opening or closing state of the leather case or a detected opening or closing state of the flip cover.

The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the terminal device, and is used in an application like switching between a landscape mode and a portrait mode or a pedometer.

The distance sensor 180F is configured to measure a distance. The electronic device 100 may measure the distance in an infrared manner or a laser manner. In some embodiments, in a photographing scenario, the electronic device 100 may measure a distance through the distance sensor 180F to implement quick focusing.

The optical proximity sensor 180G may include, for example, a light emitting diode (LED) and an optical detector, for example, a photodiode. The light emitting diode may be an infrared light emitting diode. The electronic device 100 emits infrared light by using the light-emitting diode. The electronic device 100 detects infrared reflected light from a nearby object through the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G may also be used in a smart cover mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy through the temperature detected by the temperature sensor 180J. For example, when the temperature reported by the temperature sensor 180J exceeds a threshold, the electronic device 100 lowers performance of a processor nearby the temperature sensor 180J, to reduce power consumption for thermal protection. In some other embodiments, when the temperature is lower than another threshold, the electronic device 100 heats the battery 142 to prevent the electronic device 100 from being shut down abnormally due to a low temperature. In some other embodiments, when the temperature is lower than still another threshold, the electronic device 100 boosts an output voltage of the battery 142 to avoid abnormal shutdown caused by a low temperature.

The touch sensor 180K is also referred to as a "touch component". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided through the display 194. In some other embodiments, the touch sensor 180K may also be disposed on a surface of the electronic device 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may also be disposed in the headset, to obtain a bone conduction headset. The audio module 170 may obtain a speech signal through parsing based on the vibration signal that is of the vibration bone of the vocal-cord part and that is obtained by the bone conduction sensor 180M, to implement a speech function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or a touch button. The electronic device 100 may receive a button input, and generate a button signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be simultaneously inserted into a same SIM card interface 195. The plurality of cards may be of a same type or different types. The SIM card interface 195 may be compatible with different types of SIM cards. The SIM card interface 195 is also compatible with an external storage card. The electronic device 100 interacts with a network through the SIM card, to implement functions such as conversation and data communication. In some embodiments, the electronic device 100 uses an eSIM, that is, an embedded SIM card. The eSIM card may be embedded into the electronic device 100, and cannot be separated from the electronic device 100.

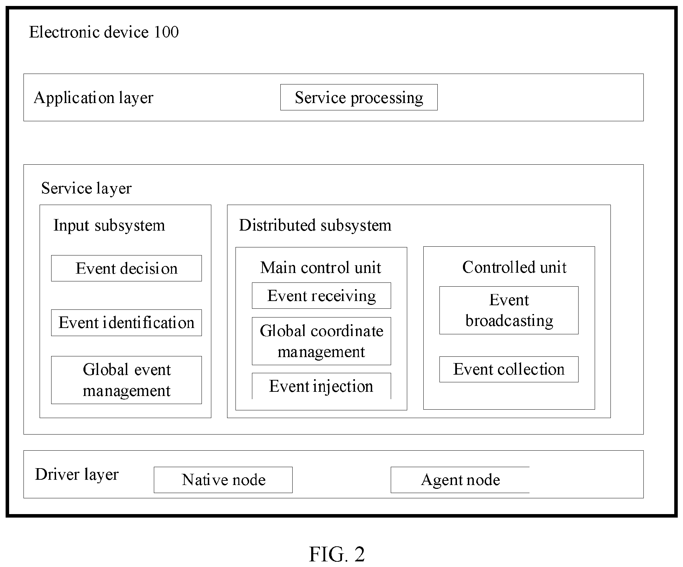

FIG. 2 is a diagram of a software architecture of an electronic device 100 according to an embodiment of this application.

A software system of the electronic device 100 may use a layered architecture, an event-driven architecture, a microkernel architecture, a micro service architecture, or a cloud architecture. In embodiments of this application, an Android system with a layered architecture is used as an example, to illustrate the software architecture of the electronic device 100.

In the layered architecture, software is divided into several layers, and each layer has a clear role and task. The layers communicate with each other through a software interface. In some embodiments, the Android system is divided into three layers: an application program layer (briefly referred to as an application layer), an application framework layer (briefly referred to as a service layer), and a kernel layer (also referred to as a driver layer) from top to bottom.

The application layer may include a series of application packages.

The application package may include applications such as camera, gallery, calendar, phone, map, navigation, WLAN, Bluetooth, music, messaging, and collaboration assistant.

After receiving a multi-device combination input event from the service layer, the application layer may perform service processing corresponding to the multi-device combination input event.

The service layer provides an application programming interface (application programming interface, API) and a programming framework for an application at the application layer. The service layer includes some predefined functions.

As shown in FIG. 2, the service layer may include an input subsystem, a distributed subsystem, and the like. Optionally, the service layer may further include a content provider, a view system, a phone manager, a resource manager, a notification manager, and the like (not shown in the figure).

The distributed subsystem includes a main control unit and a controlled unit. When the electronic device 100 is a controlled device, the electronic device 100 collects, by using the controlled unit, an event that is input by a user. When the electronic device 100 is a main control device, the electronic device 100 receives, by using the main control unit, an event sent by a controlled device.

The controlled unit includes an event broadcasting subunit and an event collection subunit. The event collection subunit may be configured to collect a native event of the controlled device, and the event broadcasting subunit is configured to broadcast the native event of the controlled device.

The main control unit includes an event receiving subunit, a global coordinate management subunit, and an event injection subunit. The event receiving subunit may be configured to receive the native event that is broadcast by the controlled device. The global coordinate management subunit is configured to form a peer-to-peer global coordinate system for input events between a plurality of devices, so that the main control device can perform global event identification. The event injection subunit is configured to inject the native event that is broadcast by the controlled device into an agent node at the driver layer, to virtualize, into an agent event, the native event that is broadcast by the controlled device, where the agent node may be a node configured to virtualize another electronic device.

The input subsystem includes a global event management unit, an event identification unit, and an event decision unit. The global event management unit may be configured to collect a native event and an agent event of the main control device. The event identification unit is configured to identify the native event and the agent event. The event decision unit is configured to determine, based on the native event and the agent event, whether an event is a multi-device combination input event.

The driver layer is a layer between hardware and software. The driver layer includes at least a display driver, a camera driver, an audio driver, and a sensor driver.

In addition, the driver layer further includes a node driver, where the node driver includes a native node driver and an agent node driver.

The native node driver is a driver of a native node. The native node is a node of the electronic device, and is configured to generate a native event. The native event may be an event generated when the user performs an input on the electronic device. It may be understood that, after the native event is generated by the user on the controlled device, the native event generated on the controlled device may be sent to the event collection subunit at the service layer; or after the native event is generated by the user on the main control device, the native event generated on the main control device may be sent to the global event management subunit at the service layer.

The agent node driver is a driver of an agent node. The agent node is configured to generate an agent event. The agent event may be obtained by virtualizing, by the main control device, a native event generated when an input is performed on the controlled device. For example, the main control device may receive the native event that is broadcast by the controlled device, virtualize the native event of the controlled device into an agent event, and send the generated agent event to the global event management subunit at the service layer.

It may be understood that, the main control device is relative to the controlled device. A device A and a device B are used as an example. When the user simultaneously performs an input on the device A and the device B, the device A may be a main control device, and the device B is a controlled device; or the device A is a controlled device, and the device B is a main control device.

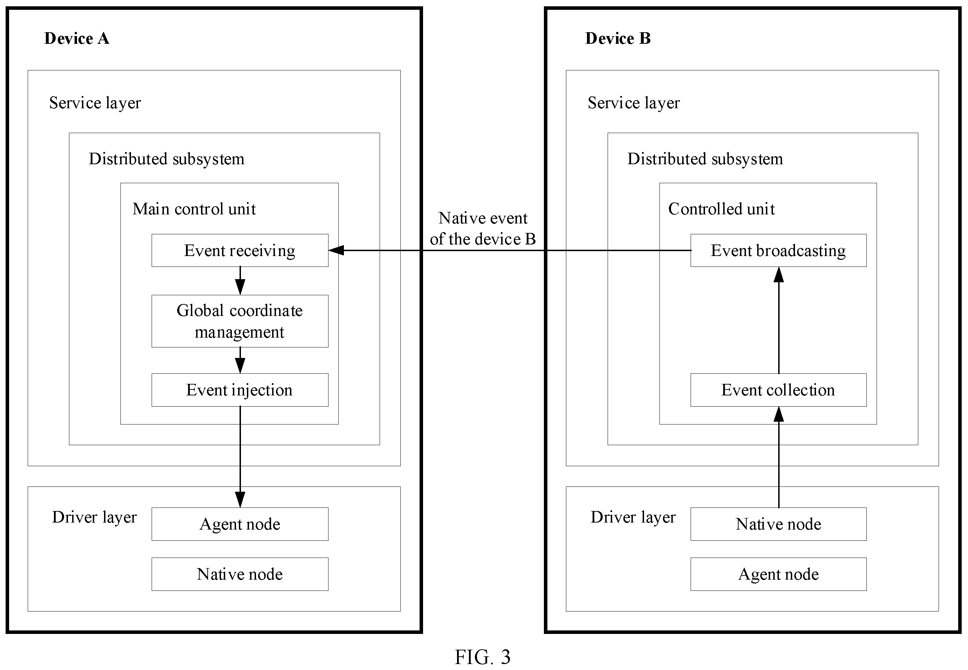

Refer to FIG. 3. The following describes an example of broadcasting a native event between electronic devices 100, for example, the device A and the device B. Refer to FIG. 3. After detecting an input operation of a user, a native node of the device B may generate a native event. The native event generated by the native node of the device B may be collected by using an event collection subunit of the device B. The native event of the device B may be broadcast by using an event broadcasting subunit of the device B. Then, the device A may receive, by using an event receiving subunit, the native event that is broadcast by the device B. Then, coordinate systems of the native event of the device B and a native event of the device A are unified by using the global coordinate management subunit, and the native event of the device B is injected into an agent node of the device A by using the event injection subunit. This can virtualize the native event of the device B into an agent event.

It may be understood that the foregoing embodiment is described by using only an example in which the native event of the device B is virtualized into the agent event in the device A, but this does not constitute a limitation on embodiments of this application. When the device A virtualizes the native event of the device B into the agent event, the device B may also virtualize, into an agent event, the native event that is broadcast by the device A. For details of a manner of virtualizing the native event of the device A into the agent event in the device B, refer to a manner of virtualizing the native event of the device B into the agent event in the device A, and details are not described herein again.

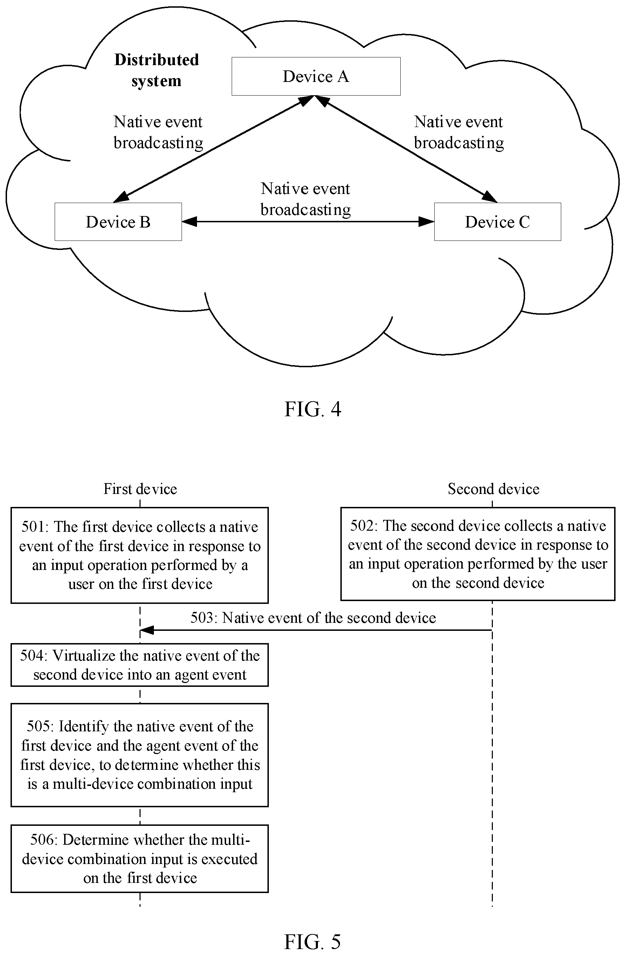

FIG. 4 is a diagram of an architecture of an application scenario according to an embodiment of this application. As shown in FIG. 4, the foregoing application scenario may include a plurality of electronic devices 100 (for example, a device A, a device B, and a device C). The plurality of electronic devices 100 may form a distributed system.

It may be understood that FIG. 3 shows only an example of the application scenario of three electronic devices, but does not constitute a limitation on embodiments of this application. In some embodiments, an application scenario may alternatively include two electronic devices or more than three electronic devices.

The Huawei HarmonyOS system is used as an example. The plurality of electronic devices 100 may be located in a distributed environment in a soft bus manner, so that the plurality of electronic devices 100 can discover and interconnect with each other. A soft bus may be understood as a bus technology. Currently, a commonly used bus may include, for example, a peripheral component interconnect (Peripheral Component Interconnect, PCI) bus, a controller area network (Controller Area Network, CAN) bus, a mobile industry processor interface (Mobile Industry Processor Interface, MIPI) bus, and an inter-integrated circuit (Inter-Integrated Circuit, IIC) bus. The soft bus may also be referred to as a distributed soft bus. The soft bus is a communication base of distributed devices, for example, a mobile phone, a tablet, an intelligent wearable device, a smart screen, and a head unit, and provides a one-stop distributed communication capability for interconnection between the devices. Main functions of the soft bus may include: discovery, connection, networking/topology management, task bus, and data bus. The discovery function means searching for a related device around. The connection function means establishing a connection to a discovered device. The networking/topology management function means performing network topology management on the discovered device, for example, forming a star network topology or a mesh network topology. The task bus function means a path for transmitting information with a small amount of data based on an established network topology. The data bus function means a path for transmitting information with a large amount of data. The plurality of electronic devices 100 may share a same system account. The Huawei HarmonyOS system is used as an example, and the plurality of electronic devices 100 may share a same Huawei account.

In some optional embodiments, the plurality of electronic devices 100 may alternatively be located in a local area network environment. A connection manner of the local area network may be a wired connection or a wireless connection. This is not specifically limited in embodiments of this application. When the plurality of electronic devices 100 are located in a same local area network, the plurality of electronic devices 100 may communicate with each other.

After the plurality of electronic devices 100 form a distributed system, any electronic device 100 in the distributed system may register as an agent node of another electronic device 100. In the foregoing distributed system, any electronic device 100 may broadcast a native event.

A device input method provided in an embodiment of this application is described with reference to FIG. 5 to FIG. 7.

FIG. 5 is a schematic flowchart of an embodiment of a device input method according to this application. In the embodiment shown in FIG. 5, a user may simultaneously perform multi-device combination input operations on a first device and a second device. For example, the user performs a click operation on the first device, and performs a click operation on the second device. The first device and the second device may be any two electronic devices in FIG. 4.

It may be understood that the first device and the second device may be a main control device and a controlled device for each other. In other words, when the first device is used as a main control device, the second device may be used as a controlled device; or when the second device is used as a main control device, the first device may be used as a controlled device.

For ease of description, in this specification, an example in which the first device is a main control device and the second device is a controlled device is used for description. It may be understood that for details of a device input manner in which the first device is a controlled device and the second device is a main control device, refer to a device input manner in which the first device is a main control device and the second device is a controlled device, and the following steps may be specifically included.

Step 501: The first device collects a native event of the first device in response to an input operation performed by the user on the first device.

Specifically, the user may perform the input operation on the first device, for example, the user performs a click operation on the first device. The first device may first generate, in response to the input operation performed by the user on the first device, the native event of the first device by using a native node driver at a driver layer. The native event of the first device may be the foregoing click event.

Then, the first device may collect, by using an event collection subunit at a service layer of the first device, the native event generated by a native node of the first device.

Step 502: The second device collects a native event of the second device in response to an input operation performed by the user on the second device.

Specifically, when performing the input operation on the first device, the user may also perform the input operation on the second device. For example, the user may perform a click operation on the second device, to trigger a multi-device combination input event. The second device may first generate, in response to the input operation performed by the user on the second device, the native event of the second device by using a native node driver at a driver layer. The native event of the second device may be the foregoing click event.

Then, the second device may collect, by using an event collection subunit at a service layer of the second device, the native event generated by a native node of the second device.

It may be understood that step 502 may be performed after step 501, or may be performed before step 501, or may be simultaneously performed with step 501. This is not specifically limited in this embodiment of this application.

Step 503: The second device broadcasts the native event of the second device. Correspondingly, the first device receives the native event of the second device that is broadcast by the second device.

Specifically, after collecting the native event, the second device may broadcast the native event. A broadcast manner may include but is not limited to a manner of a soft bus, Bluetooth, wireless fidelity (wireless fidelity, WI-FI), distributed data synchronization, and the like. This is not specifically limited in this embodiment of this application.

It may be understood that when the second device broadcasts the native event, an event type and a device identifier may be further carried. The event type may represent a user input manner, for example, the user performs an input by using a mouse, a keyboard, or a touchscreen. The device identifier represents an identity of an electronic device 100. For example, the device identifier may be a device ID.

In some optional embodiments, when the second device broadcasts the native event, event coordinates may be further carried. For example, if the user performs an input by using a touchscreen, or the like, event coordinates may be generated for an input event of the user. Because the user refers to respective coordinate systems when performing an input on different electronic devices 100, reference coordinate systems of the different electronic devices 100 need to share one global coordinate system.

It may be understood that when the user performs an input by using a mouse, a keyboard, or the like, because no event coordinates are generated, event coordinates do not need to be broadcast.

After the second device broadcasts the native event, another device in a distributed system may receive the native event of the second device. The first device is used as an example. The first device may receive, by using an event receiving subunit at the service layer, the native event that is broadcast by the second device.

Step 504: The first device virtualizes the native event of the second device into an agent event.

Specifically, after receiving the native event of the second device, the first device may inject the native event of the second device into an agent node by using an event injection subunit at the service layer, to virtualize the native event of the second device into the agent event.

In some optional embodiments, before virtualizing the native event of the second device into the agent event, the first device may further perform global coordinate management on the native event of the second device, so that the native event of the second device and the native event of the first device share a same coordinate system, to determine, in the same coordinate system, whether an input of the user is a multi-device combination input.

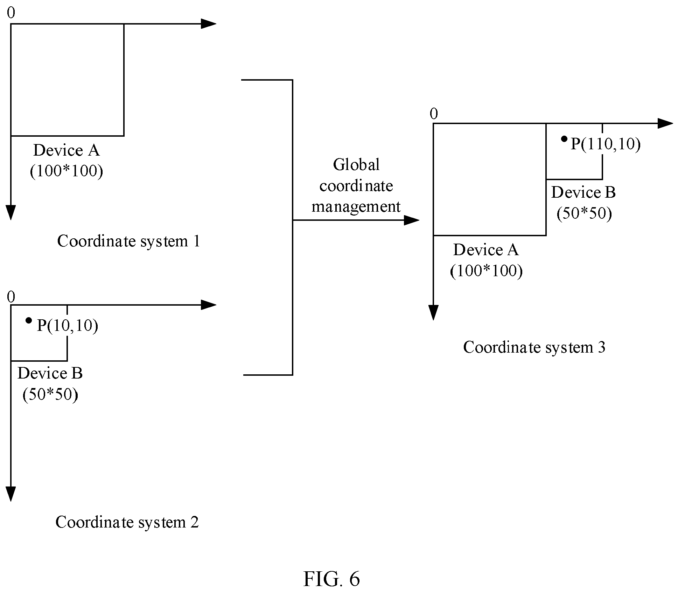

The following describes an example of a processing manner of global coordinate management with reference to FIG. 6.

Refer to FIG. 6. A coordinate system 1 is a coordinate system of the first device, a size of the first device in the coordinate system 1 is 100*100, a coordinate system 2 is a coordinate system of the second device, and a size of the second device in the coordinate system 2 is 50*50. Coordinates of the native event of the second device in the coordinate system 2 are P(10,10). The first device and the second device may be placed in a global coordinate system by using a relative location between the first device and the second device. Therefore, a coordinate system 3 may be obtained. The relative location between the first device and the second device may be obtained by using user configuration or orientation sensing. This is not specifically limited in this application. The coordinate system of the first device and the coordinate system of the second device are combined into one global coordinate system, to convert event coordinates of all devices into coordinates in the same global coordinate system. For example, the native event P of the second device is converted from the coordinates (10,10) in the coordinate system 2 to coordinates (110,10) in the coordinate system 3.

Step 505: The first device identifies the native event and the agent event of the first device, to determine whether this is a multi-device combination input.

Specifically, the first device may obtain the native event and the agent event of the first device by using a global event management subunit at the service layer. It may be understood that the native event of the first device is sent by the native node at the driver layer to the global event management subunit. When the first device sends the native event to the global event management subunit, an event type and a device identifier that correspond to the native event may be further carried. In some embodiments, corresponding event coordinates may alternatively be carried. The agent event is sent by the agent node at the driver layer to the global event management subunit. When the first device sends the agent event to the global event management subunit, an event type and a device identifier that correspond to the agent event may be further carried. In some embodiments, the first device may further include corresponding event coordinates in the agent event.

Then, the first device identifies the native event and the agent event of the first device by using an event identification subunit, to determine whether the input of the user is a multi-device combination input.

For example, a manner in which the first device identifies the native event and the agent event of the first device may be:

The first device determines, based on a preset multi-device combination input scenario, whether a current input of the user is a multi-device combination input.

A plurality of multi-device combination input scenarios may be preset in the first device, and each multi-device combination input scenario includes a combination of a plurality of events. Table 1 uses a device A, a device B, and a device C as an example, to show examples of preset multi-device combination input scenarios.

**Table 1**

| Multi-device combination input scenario | Event combination |
|---|---|
| Multi-device combination input scenario 1 | Input event a1+input event b1 |
| Multi-device combination input scenario 2 | Input event a1+input event b2 |
| Multi-device combination input scenario 3 | Input event a1+input event c1 |
| Multi-device combination input scenario 4 | Input event b1+input event c1 |
| Multi-device combination input scenario 5 | Input event a1+input event b1+input event c1 |

It can be learned from Table 1 that the multi-device combination input scenario may include a combination of two or more device events. That is, the user may simultaneously perform an input operation on two or more devices, to trigger a multi-device combination input event. After obtaining the native event and the agent event, the first device may combine an operation on the native event and an operation on the agent event, and then perform query in Table 1. If a corresponding multi-device combination input scenario is found, it may be determined that a current input of the user is a multi-device combination input; or if no corresponding multi-device combination input scenario is found, it may be determined that a current input of the user is not a multi-device combination input.

For example, the user performs a click operation on the first device and performs a click operation on the second device. Assuming that the preset multi-device combination input scenario includes a combination of a click operation and a click operation, the current input operations of the user may be determined as a multi-device multi-touch event, namely, a multi-device combination input event by using the foregoing operation of the user.

In some optional embodiments, because matching of the multi-device combination input scenario requires a relatively large computation amount, before matching, the first device may determine, based on a device identifier, whether a current input event of the user is a multi-device event, and may perform matching on the multi-device combination input scenario after determining that the current input event of the user is a multi-device event. That is, after determining that the current input event of the user is not a multi-device event, matching of the multi-device combination input scenario is not performed. This can reduce a computation amount.

It may be understood that a device identifier of the native event of the first device corresponds to a device identifier of the first device, and a device identifier of the agent event corresponds to a device identifier of the second device. It can be learned from the device identifier of the first device and the device identifier of the second device that the user performs an input on a plurality of devices, so that it can be determined that the current input event of the user is a multi-device event.

In some optional embodiments, the first device may further determine, by using an event type, whether a current input event of the user is a multi-device event. For example, the user performs a touchscreen operation on the first device, and the user may perform a mouse operation on the second device, so that it may be determined that the current input event of the user is a multi-device event.

In some optional embodiments, to more accurately determine the multi-device combination input scenario, the multi-device combination input scenario may be further determined based on event coordinates. For example, for two electronic devices equipped with touchscreens, input operations performed by the user on the two electronic devices are both touch operations. For example, the first device and the second device are both equipped with touchscreens. The first device may determine coordinates of the native event and the agent event in the global coordinate system, and may determine the multi-device combination input scenario based on the coordinates of the native event and the agent event and the operations of the user, to more accurately determine the multi-device combination input scenario. For example, it may be determined that the multi-device combination input scenario is splicing a picture in the first device and a picture in the second device, sending a file in the second device to a folder in the first device, or sending a file in the second device to a display interface of an application currently running in the first device.

Step 506: The first device determines whether the multi-device combination input event is executed on the first device.

Specifically, after the first device determines the multi-device combination input by using the event identification subunit, whether the foregoing multi-device combination input event is executed on the first device is determined by using an event determining subunit.

A manner in which whether the multi-device combination input event is executed on the first device is determined by using the event decision subunit may be: based on a preset execution mechanism. For example, the preset execution mechanism is used to represent that any device in an event combination corresponding to a multi-device combination input is an execution device. Using the multi-device combination input scenario 1 in Table 1 as an example, an electronic device corresponding to the input event a1 may be preset as an execution device. With reference to this embodiment of this application, assuming that an electronic device on which the user performs a preset click operation is an execution device, because the user performs the click operation on the first device, it may be determined that the first device is an execution device. In other words, the multi-device combination input event is executed on the first device. However, the user performs a click operation on the second device, that is, the second device is a non-execution device. Therefore, the multi-device combination input event is not executed on the second device.

It may be understood that, after the first device determines, by using the event decision subunit, that the execution device is the first device, the multi-device combination input event may be sent to an application layer of the first device, so that the application layer may execute a service corresponding to the multi-device combination input event.

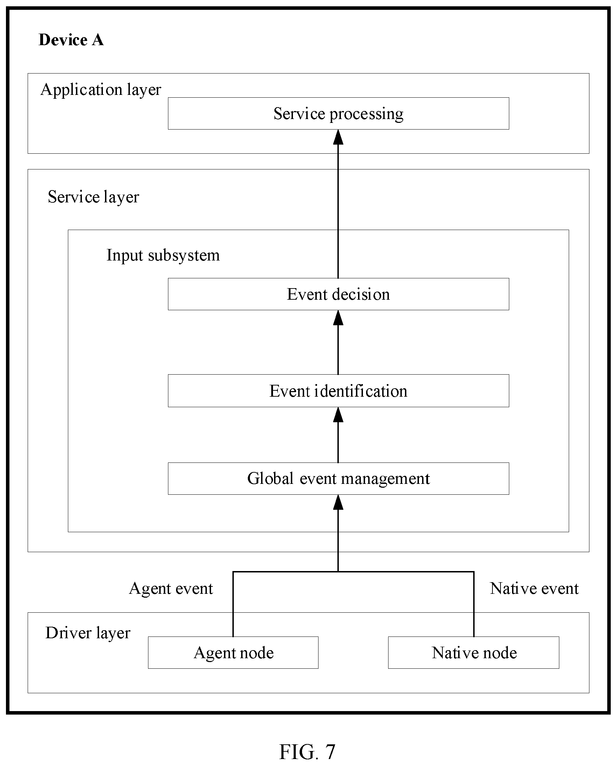

The following describes an example of identifying a multi-device combination input by using the first device as an example with reference to FIG. 7. Refer to FIG. 7. The first device sends the native event to the global event management subunit at the service layer by using the native node at the driver layer, and sends the agent event to the global event management subunit at the service layer by using the agent node at the driver layer. After receiving the native event and the agent event by using the global event management subunit at the service layer, the first device performs identification by using the event identification subunit, to determine whether a current input of the user is a multi-device combination input. After it is determined that the current input of the user is a multi-device combination input, whether the first device is an execution device may be determined by using the event decision subunit. If it is determined that the first device is an execution device, the multi-device combination input event may be sent to the application layer, and the application layer performs service processing corresponding to the multi-device combination input event.

It may be understood that this embodiment of this application only uses an example in which the user clicks on the first device and clicks the second device for description, but does not constitute a limitation on this embodiment of this application. In some embodiments, the user may further perform another type of multi-device combination input operation.

In addition, this embodiment of this application only uses an example in which the user simultaneously performs input operations on the two electronic devices for description, but this does not constitute a limitation on this embodiment of this application. In some embodiments, the user may further simultaneously perform input operations on more than two electronic devices. For details of a manner in which the user simultaneously performs the input operations on more than two electronic devices, refer to a manner in which the user simultaneously performs the input operations on the two electronic devices in the foregoing embodiment. Details are not described herein again.

In this embodiment of this application, in a distributed environment, after a user performs an input operation, any electronic device broadcasts a native event corresponding to the input operation of the user, and generates a corresponding virtualized agent event in another device. In this case, the electronic device in the distributed environment can determine, based on the native event and the agent event of the electronic device, whether the input of the user is a multi-device combination input, to effectively implement a combination input of the user on a plurality of devices.

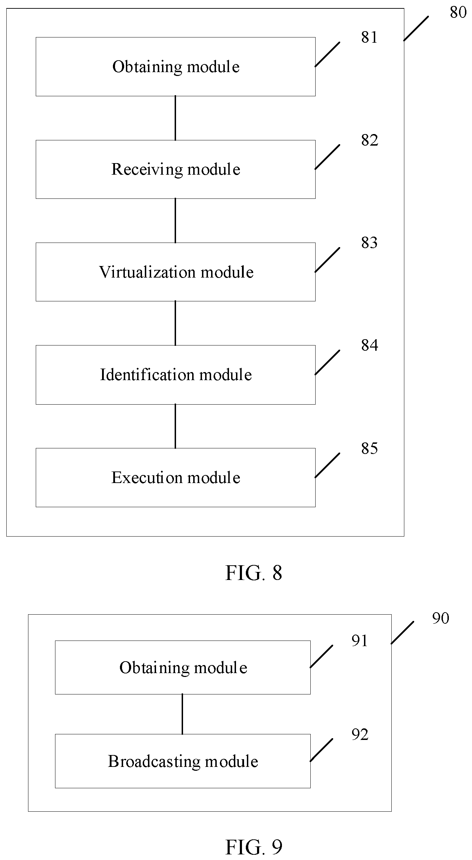

FIG. 8 is a diagram of a structure of another embodiment of a device input apparatus according to this application. As shown in FIG. 8, the device input apparatus 80 is applied to a first device. The device input apparatus 80 may include an obtaining module 81, a receiving module 82, a virtualization module 83, an identification module 84, and an execution module 85.

An obtaining module 81 is configured to obtain a native event of the first device in response to an input operation performed by a user on the first device.

A receiving module 82 is configured to receive a native event that is broadcast by a second device, where the native event of the second device is generated by an input operation performed by the user on the second device, and the second device and the first device are in a same distributed system.

A virtualization module 83 is configured to virtualize the native event of the second device into an agent event.

An identification module 84 is configured to determine, based on the native event and the agent event of the first device, whether an input of the user is a multi-device combination input.

An execution module 85 is configured to: if determining that the input of the user is a multi-device combination input, determine whether the first device is an execution device; and if determining that the first device is an execution device, execute a service corresponding to the multi-device combination input event.

In a possible implementation, the identification module 84 is specifically configured to match a combination of the native event and the agent event of the first device with a preset multi-device combination input scenario set, to determine whether the input of the user is a multi-device combination input, where the preset multi-device combination input scenario set includes one or more preset multi-device combination input scenarios, and each preset multi-device combination input scenario includes a plurality of events.

In a possible implementation, the receiving module 82 is further configured to receive a device identifier that is broadcast by the second device, where the device identifier of the second device represents an identity of the second device, and the device identifier of the second device corresponds to the native event of the second device.

In a possible implementation, the receiving module 82 is further configured to receive an event type and/or event coordinates that are broadcast by the second device, where the event type and/or the event coordinates of the second device correspond to the native event of the second device, the event type of the second device represents an input manner of the user on the second device, and the event coordinates of the second device represent coordinates corresponding to an input of the user on the second device.

In a possible implementation, the apparatus 80 further includes:
a broadcasting module, configured to broadcast the native event of the first device.

In a possible implementation, the broadcasting module is further configured to broadcast a device identifier of the first device, where the device identifier of the first device represents an identity of the first device, and the device identifier of the first device corresponds to the native event of the first device.

In a possible implementation, the broadcasting module is further configured to broadcast an event type and/or event coordinates of the first device, where the event type and/or the event coordinates of the first device correspond to the native event of the first device, the event type of the first device represents an input manner of the user on the first device, and the event coordinates of the first device represent coordinates corresponding to an input of the user on the first device.

The device input apparatus 80 provided in the embodiment shown in FIG. 8 may be configured to perform the technical solution in the method embodiment in this application. For an implementation principle and a technical effect of the device input apparatus, further refer to related descriptions in the method embodiment.

FIG. 9 is a diagram of a structure of another embodiment of a device input apparatus according to this application. As shown in FIG. 9, the device input apparatus 90 is applied to a second device. The device input apparatus 90 may include an obtaining module 91 and a broadcasting module 92.

The obtaining module 91 is configured to obtain a native event of the second device in response to an input operation performed by a user on the second device.

The broadcasting module 92 is configured to broadcast the native event of the second device.

In a possible implementation, the broadcasting module 92 is further configured to broadcast a device identifier of the second device, where the device identifier of the second device represents an identity of the second device, and the device identifier of the second device corresponds to the native event of the second device.

In a possible implementation, the broadcasting module 92 is further configured to broadcast an event type and/or event coordinates of the second device, where the event type and/or the event coordinates of the second device correspond to the native event of the second device, the event type of the second device represents an input manner of the user on the second device, and the event coordinates of the second device represent coordinates corresponding to an input of the user on the second device.

In a possible implementation, the apparatus 90 further includes:
a receiving module, configured to receive a native event that is broadcast by a first device, where the native event of the first device is generated by an input operation performed by the user on the first device, and the first device and the second device are in a same distributed system;
a virtualization module, configured to virtualize the native event of the first device into an agent event;
an identification module, configured to determine, based on the native event and the agent event of the second device, whether an input of the user is a multi-device combination input; and

An execution module, configured to: if determining that the input of the user is a multi-device combination input, determine whether the second device is an execution device; and if determining that the second device is an execution device, execute a service corresponding to the multi-device combination input event.

In a possible implementation, the identification module is specifically configured to match a combination of the native event and the agent event of the second device with a preset multi-device combination input scenario set, to determine whether the input of the user is a multi-device combination input, where the preset multi-device combination input scenario set includes one or more preset multi-device combination input scenarios, and each preset multi-device combination input scenario includes a plurality of events.

The device input apparatus 90 provided in the embodiment shown in FIG. 9 may be configured to perform the technical solution in the method embodiment in this application. For an implementation principle and a technical effect of the device input apparatus, further refer to related descriptions in the method embodiment.

It should be understood that division of the modules of the device input apparatus 80 shown in FIG. 8 and the device input apparatus 90 shown in FIG. 9 is merely logical function division. During actual implementation, some or all of the modules may be integrated into one physical entity, or may be physically separated. In addition, the modules may be all implemented in a form of software invoking processing elements; or the modules may be all implemented in a form of hardware; or some modules may be implemented in a form of software invoking processing elements, and some modules may be implemented in a form of hardware. For example, the detection module may be an independently disposed processing element, or may be integrated in one chip of an electronic device for implementation. Implementations of other modules are similar. In addition, all or some of the modules may be integrated, or may be implemented independently. In an implementation process, steps in the foregoing methods or the foregoing modules can be implemented by using a hardware integrated logic circuit in the processing element, or by using instructions in a form of software.

For example, the foregoing modules may be one or more integrated circuits configured to implement the foregoing method, for example, one or more application-specific integrated circuits (Application-Specific Integrated Circuits, ASICs for short), or one or more microprocessors (Digital Signal Processor, DSP for short) or one or more field programmable gate arrays (Field Programmable Gate Array, FPGA for short) and the like. For another example, the modules may be integrated together and implemented in a form of a system-on-a-chip (System-On-a-Chip, SOC for short below).

In the foregoing embodiments, related processors may include, for example, a CPU, a DSP, a microcontroller, or a digital signal processor, and may further include a GPU, an embedded neural-network processing unit (Neural-network Processing Unit, NPU for short), and an image signal processor (Image Signal Processing, ISP for short). The processors may further include a necessary hardware accelerator or logic processing hardware circuit, for example, an ASIC, or one or more integrated circuits configured to control program execution of the technical solutions of this application. In addition, the processors may have a function of operating one or more software programs, and the software programs may be stored in a storage medium.

An embodiment of this application further provides a computer-readable storage medium. The computer-readable storage medium stores a computer program. When the computer program is run on a computer, the computer is enabled to perform the methods provided in embodiments of this application.

An embodiment of this application further provides a computer program product. The computer program product includes a computer program. When the computer program is run on a computer, the computer is enabled to perform the method provided in embodiments of this application.

In embodiments of this application, "at least one" means one or more, and "a plurality of" means two or more. The term "and/or" describes an association relationship for describing associated objects and represents that three relationships may exist. For example, A and/or B may represent the following cases: Only A exists, both A and B exist, and only B exists. A and B may be singular or plural. The character "/" generally indicates an "or" relationship between the associated objects. "At least one of the following" and similar expressions mean any combination of these terms, including any combination of single or plural terms. For example, at least one of a, b, or c may indicate a, b, c, a and b, a and c, b and c, or a, b, and c, where a, b, and c may be singular or plural.

A person of ordinary skill in the art may be aware that the units and algorithm steps described in embodiments disclosed in this specification can be implemented by a combination of electronic hardware, computer software, and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, when any function is implemented in a form of a software functional unit and sold or used as an independent product, the function may be stored on a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for indicating a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM for short), a random access memory (Random Access Memory, RAM for short), a magnetic disk, or an optical disc.

The foregoing descriptions are merely specific implementations of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A device input method, wherein the method comprises:
obtaining (501), by the first device, a first native event of the first device in response to an input operation performed on the first device;
receiving (503), by the first device, a second native event that is broadcast by a second device, wherein the second native event of the second device is generated by an input operation performed on the second device that is simultaneous with the input operation performed on the first device, and the second device and the first device are in a same distributed system;
virtualizing (504), by the first device, the second native event of the second device into an agent event;
determining, by the first device, whether the first native event and the agent event of the first device relate to a multi-device combination input;
if determining that the input is a multi-device combination input, determining (506), by the first device, whether the first device is an execution device; and
if determining that the first device is an execution device, executing, by the first device, a service corresponding to the multi-device combination input event;
wherein the determining whether the first native event and the agent event of the first device relate to a multi-device combination input comprises:
matching, by the first device, a combination of the first native event and the agent event of the first device with a preset multi-device combination input scenario set, to determine whether the input of the user is a multi-device combination input, wherein the preset multi-device combination input scenario set comprises one or more preset multi-device combination input scenarios, and each preset multi-device combination input scenario comprises a plurality of events.

2. The method according to claim 1, wherein the method further comprises:
receiving, by the first device, a device identifier that is broadcast by the second device, wherein the device identifier of the second device represents an identity of the second device, and the device identifier of the second device corresponds to the second native event of the second device.

3. The method according to claim 1 or 2, wherein the method further comprises:
receiving, by the first device, an event type and/or event coordinates that are broadcast by the second device, wherein the event type and/or the event coordinates of the second device correspond to the second native event of the second device, the event type of the second device represents an input manner on the second device, and the event coordinates of the second device represent coordinates corresponding to an input on the second device.

4. The method according to any one of claims 1 to 3, wherein the method further comprises:
broadcasting, by the first device, the first native event of the first device.

5. The method according to any one of claims 1 to 4, wherein the method further comprises:
broadcasting, by the first device, a device identifier of the first device, wherein the device identifier of the first device represents an identity of the first device, and the device identifier of the first device corresponds to the first native event of the first device.

6. The method according to any one of claims 1 to 5, wherein the method further comprises:
broadcasting, by the first device, an event type and/or event coordinates of the first device, wherein the event type and/or the event coordinates of the first device correspond to the first native event of the first device, the event type of the first device represents an input manner on the first device, and the event coordinates of the first device represent coordinates corresponding to an input on the first device.

7. The method according to any one of claims 1 to 6, wherein the method comprises:
obtaining, by the second device, a second native event of the second device in response to an input operation performed on the second device; and
broadcasting, by the second device, the second native event of the second device.

8. The method according to claim 7, wherein the method further comprises:
broadcasting, by the second device, a device identifier of the second device, wherein the device identifier of the second device represents an identity of the second device, and the device identifier of the second device corresponds to the second native event of the second device.

9. The method according to claim 7 or 8, wherein the method further comprises:
broadcasting, by the second device, an event type and/or event coordinates of the second device, wherein the event type and/or the event coordinates of the second device correspond to the second native event of the second device, the event type of the second device represents an input manner on the second device, and the event coordinates of the second device represent coordinates corresponding to an input on the second device.

10. The method according to any one of claims 7 to 9, wherein the method further comprises:
receiving, by the second device, a first native event that is broadcast by a first device, wherein the first native event of the first device is generated by an input operation performed on the first device, and the first device and the second device are in a same distributed system;
virtualizing, by the second device, the first native event of the first device into an agent event;
determining, by the second device, whether the second native event and the agent event of the second device relates to a multi-device combination input;
if determining that the input is a multi-device combination input, determining, by the second device, whether the second device is an execution device; and
if determining that the second device is an execution device, executing, by the second device, a service corresponding to the multi-device combination input event.

11. The method according to claim 10, wherein the determining, based on the second native event and the agent event of the second device, whether an input is a multi-device combination input comprises:
matching, by the second device, a combination of the second native event and the agent event of the second device with a preset multi-device combination input scenario set, to determine whether the input is a multi-device combination input, wherein the preset multi-device combination input scenario set comprises one or more preset multi-device combination input scenarios, and each preset multi-device combination input scenario comprises a plurality of events.

12. A first device, comprising a processor and a memory, wherein the memory is configured to store a computer program, and the processor is configured to run the computer program to implement the steps performed by the first device in the device input method according to any one of claims 1 to 11.

13. A device input system, comprising the first device according to claim 12 and a second device, the second device comprising a processor and a memory, wherein the memory is configured to store a computer program, and the processor is configured to run the computer program to implement the steps performed by the second device in the device input method according to any one of claims 7 to 11.

14. A computer-readable storage medium, wherein the computer-readable storage medium stores a computer program, and when the computer program is run on a computer, the steps performed by the first device in the device input method according to any one of claims 1 to 11 is implemented.

## Patentansprüche

1. Vorrichtungseingabeverfahren, wobei das Verfahren umfasst:
Erhalten (501), durch die erste Vorrichtung, eines ersten nativen Ereignisses der ersten Vorrichtung als Reaktion auf eine Eingabeoperation, die an der ersten Vorrichtung durchgeführt wird;
Empfangen (503), durch die erste Vorrichtung, eines zweiten nativen Ereignisses, das von einer zweiten Vorrichtung rundgesendet wird, wobei das zweite native Ereignis der zweiten Vorrichtung durch eine an der zweiten Vorrichtung durchgeführte Eingabeoperation erzeugt wird, die gleichzeitig mit der an der ersten Vorrichtung durchgeführten Eingabeoperation erfolgt, und sich die zweite Vorrichtung und die erste Vorrichtung in demselben verteilten System befinden;
Virtualisieren (504), durch die erste Vorrichtung, des zweiten nativen Ereignisses der zweiten Vorrichtung zu einem Agentenereignis;
Bestimmen, durch die erste Vorrichtung, ob sich das erste native Ereignis und das Agentenereignis der ersten Vorrichtung auf eine Mehrvorrichtungs-Kombinationseingabe beziehen;
wenn bestimmt wird, dass die Eingabe eine Mehrvorrichtungs-Kombinationseingabe ist, Bestimmen (506) durch die erste Vorrichtung, ob die erste Vorrichtung eine Ausführungsvorrichtung ist; und
wenn bestimmt wird, dass die erste Vorrichtung eine Ausführungsvorrichtung ist, Ausführen, durch die erste Vorrichtung, eines Dienstes, der dem Mehrvorrichtungs-Kombinationseingabeereignis entspricht;
wobei das Bestimmen, ob sich das erste native Ereignis und das Agentenereignis der ersten Vorrichtung auf eine Mehrvorrichtungs-Kombinationseingabe beziehen, Folgendes umfasst:
Abgleichen, durch die erste Vorrichtung, einer Kombination des ersten nativen Ereignisses und des Agentenereignisses der ersten Vorrichtung mit einem voreingestellten Satz von Mehrvorrichtungs-Kombinationseingabeszenarien, um zu bestimmen, ob die Eingabe des Benutzers eine Mehrvorrichtungs-Kombinationseingabe ist, wobei der voreingestellte Satz von Mehrvorrichtungs-Kombinationseingabeszenarien ein oder mehrere voreingestellte Mehrvorrichtungs-Kombinationseingabeszenarien umfasst und jedes voreingestellte Mehrvorrichtungs-Kombinationseingabeszenario eine Mehrzahl von Ereignissen umfasst.

2. Verfahren nach Anspruch 1, wobei das Verfahren ferner Folgendes umfasst:
Empfangen, durch die erste Vorrichtung, einer Vorrichtungskennung, die von der zweiten Vorrichtung rundgesendet wird, wobei die Vorrichtungskennung der zweiten Vorrichtung eine Identität der zweiten Vorrichtung repräsentiert und die Vorrichtungskennung der zweiten Vorrichtung dem zweiten nativen Ereignis der zweiten Vorrichtung entspricht.

3. Verfahren nach Anspruch 1 oder 2, wobei das Verfahren ferner Folgendes umfasst:
Empfangen, durch die erste Vorrichtung, eines Ereignistyps und/oder von Ereigniskoordinaten, die von der zweiten Vorrichtung rundgesendet werden, wobei der Ereignistyp und/oder die Ereigniskoordinaten der zweiten Vorrichtung dem zweiten nativen Ereignis der zweiten Vorrichtung entsprechen, der Ereignistyp der zweiten Vorrichtung eine Eingabeweise auf der zweiten Vorrichtung repräsentiert und die Ereigniskoordinaten der zweiten Vorrichtung Koordinaten repräsentieren, die einer Eingabe auf der zweiten Vorrichtung entsprechen.

4. Verfahren nach einem der Ansprüche 1 bis 3, wobei das Verfahren ferner Folgendes umfasst:
Rundsenden, durch die erste Vorrichtung, des ersten nativen Ereignisses der ersten Vorrichtung.

5. Verfahren nach einem der Ansprüche 1 bis 4, wobei das Verfahren ferner Folgendes umfasst:
Rundsenden, durch die erste Vorrichtung, einer Vorrichtungskennung der ersten Vorrichtung, wobei die Vorrichtungskennung der ersten Vorrichtung eine Identität der ersten Vorrichtung repräsentiert und die Vorrichtungskennung der ersten Vorrichtung dem ersten nativen Ereignis der ersten Vorrichtung entspricht.

6. Verfahren nach einem der Ansprüche 1 bis 5, wobei das Verfahren ferner Folgendes umfasst:
Rundsenden, durch die erste Vorrichtung, eines Ereignistyps und/oder von Ereigniskoordinaten der ersten Vorrichtung, wobei der Ereignistyp und/oder die Ereigniskoordinaten der ersten Vorrichtung dem ersten nativen Ereignis der ersten Vorrichtung entsprechen, der Ereignistyp der ersten Vorrichtung eine Eingabeweise auf der ersten Vorrichtung repräsentiert und die Ereigniskoordinaten der ersten Vorrichtung Koordinaten repräsentieren, die einer Eingabe auf der ersten Vorrichtung entsprechen.

7. Verfahren nach einem der Ansprüche 1 bis 6, wobei das Verfahren Folgendes umfasst:
Erhalten, durch die zweite Vorrichtung, eines zweiten nativen Ereignisses der zweiten Vorrichtung als Reaktion auf eine Eingabeoperation, die an der zweiten Vorrichtung durchgeführt wird; und
Rundsenden, durch die zweite Vorrichtung, des zweiten nativen Ereignisses der zweiten Vorrichtung.

8. Verfahren nach Anspruch 7, wobei das Verfahren ferner Folgendes umfasst:
Rundsenden, durch die zweite Vorrichtung, einer Vorrichtungskennung der zweiten Vorrichtung, wobei die Vorrichtungskennung der zweiten Vorrichtung eine Identität der zweiten Vorrichtung repräsentiert und die Vorrichtungskennung der zweiten Vorrichtung dem zweiten nativen Ereignis der zweiten Vorrichtung entspricht.

9. Verfahren nach Anspruch 7 oder 8, wobei das Verfahren ferner Folgendes umfasst:
Rundsenden, durch die zweite Vorrichtung, eines Ereignistyps und/oder von Ereigniskoordinaten der zweiten Vorrichtung, wobei der Ereignistyp und/oder die Ereigniskoordinaten der zweiten Vorrichtung dem zweiten nativen Ereignis der zweiten Vorrichtung entsprechen, der Ereignistyp der zweiten Vorrichtung eine Eingabeweise auf der zweiten Vorrichtung repräsentiert und die Ereigniskoordinaten der zweiten Vorrichtung Koordinaten repräsentieren, die einer Eingabe auf der zweiten Vorrichtung entsprechen.

10. Verfahren nach einem der Ansprüche 7 bis 9, wobei das Verfahren ferner Folgendes umfasst:
Empfangen, durch die zweite Vorrichtung, eines ersten nativen Ereignisses, das von einer ersten Vorrichtung rundgesendet wird, wobei das erste native Ereignis der ersten Vorrichtung durch eine Eingabeoperation erzeugt wird, die an der ersten Vorrichtung durchgeführt wird, und sich die erste Vorrichtung und die zweite Vorrichtung in demselben verteilten System befinden;
Virtualisieren, durch die zweite Vorrichtung, des ersten nativen Ereignisses der ersten Vorrichtung zu einem Agentenereignis;
Bestimmen, durch die zweite Vorrichtung, ob sich das zweite native Ereignis und das Agentenereignis der zweiten Vorrichtung auf eine Mehrvorrichtungs-Kombinationseingabe beziehen;
wenn bestimmt wird, dass die Eingabe eine Mehrvorrichtungs-Kombinationseingabe ist, Bestimmen durch die zweite Vorrichtung, ob die zweite Vorrichtung eine Ausführungsvorrichtung ist; und
wenn bestimmt wird, dass die zweite Vorrichtung eine Ausführungsvorrichtung ist, Ausführen, durch die zweite Vorrichtung, eines Dienstes, der dem Mehrvorrichtungs-Kombinationseingabeereignis entspricht.

11. Verfahren nach Anspruch 10, wobei das Bestimmen auf Grundlage des zweiten nativen Ereignisses und des Agentenereignisses der zweiten Vorrichtung, ob eine Eingabe eine Mehrvorrichtungs-Kombinationseingabe ist, Folgendes umfasst:
Abgleichen, durch die zweite Vorrichtung, einer Kombination des zweiten nativen Ereignisses und des Agentenereignisses der zweiten Vorrichtung mit einem voreingestellten Satz von Mehrvorrichtungs-Kombinationseingabeszenarien, um zu bestimmen, ob die Eingabe eine Mehrvorrichtungs-Kombinationseingabe ist, wobei der voreingestellte Satz von Mehrvorrichtungs-Kombinationseingabeszenarien ein oder mehrere voreingestellte Mehrvorrichtungs-Kombinationseingabeszenarien umfasst und jedes voreingestellte Mehrvorrichtungs-Kombinationseingabeszenario eine Mehrzahl von Ereignissen umfasst.

12. Erste Vorrichtung, umfassend einen Prozessor und einen Speicher, wobei der Speicher dazu ausgelegt ist, ein Computerprogramm zu speichern, und der Prozessor dazu ausgelegt ist, das Computerprogramm auszuführen, um die durch die erste Vorrichtung in dem Vorrichtungseingabeverfahren nach einem der Ansprüche 1 bis 11 durchgeführten Schritte zu implementieren.

13. Vorrichtungseingabesystem, das die erste Vorrichtung nach Anspruch 12 und eine zweite Vorrichtung umfasst, wobei die zweite Vorrichtung einen Prozessor und einen Speicher umfasst, wobei der Speicher dazu ausgelegt ist, ein Computerprogramm zu speichern, und der Prozessor dazu ausgelegt ist, das Computerprogramm auszuführen, um die durch die zweite Vorrichtung durchgeführten Schritte in dem Vorrichtungseingabeverfahren nach einem der Ansprüche 7 bis 11 zu implementieren.

14. Computerlesbares Speichermedium, wobei das computerlesbare Speichermedium ein Computerprogramm speichert und, wenn das Computerprogramm auf einem Computer ausgeführt wird, die durch die erste Vorrichtung in dem Vorrichtungseingabeverfahren nach einem der Ansprüche 1 bis 11 durchgeführten Schritte implementiert werden.

## Revendications

1. Procédé d'entrée sur un dispositif, le procédé comprenant :
l'obtention (501), par le premier dispositif, d'un premier événement natif du premier dispositif en réponse à une opération d'entrée effectuée sur le premier dispositif ;
la réception (503), par le premier dispositif, d'un deuxième événement natif qui est diffusé par un deuxième dispositif, le deuxième événement natif du deuxième dispositif étant généré par une opération d'entrée effectuée sur le deuxième dispositif qui est concomitante à l'opération d'entrée effectuée sur le premier dispositif, et le deuxième dispositif et le premier dispositif se trouvant dans un même système distribué ;
la virtualisation (504), par le premier dispositif, du deuxième événement natif du deuxième dispositif en un événement agent ;
la détermination, par le premier dispositif, que le premier événement natif et l'événement agent du premier dispositif concernent ou non une entrée sur une combinaison multidispositif ;
en cas de détermination que l'entrée est une entrée sur une combinaison multidispositif, la détermination (506), par le premier dispositif, que le premier dispositif est ou n'est pas un dispositif d'exécution ; et
en cas de détermination que le premier dispositif est un dispositif d'exécution, l'exécution, par le premier dispositif, d'un service correspondant à l'événement d'entrée sur une combinaison multidispositif ;
dans lequel la détermination que le premier événement natif et l'événement agent du premier dispositif concernent ou non une entrée sur une combinaison multidispositif comprend :
la mise en correspondance, par le premier dispositif, d'une combinaison du premier événement natif et de l'événement agent du premier dispositif avec un ensemble de scénarios d'entrée sur une combinaison multidispositif prédéfinis, pour déterminer si l'entrée de l'utilisateur est une entrée sur une combinaison multidispositif, l'ensemble de scénarios d'entrée sur une combinaison multidispositif prédéfinis comprenant un ou plusieurs scénarios d'entrée sur une combinaison multidispositif prédéfinis, et chaque scénario d'entrée sur une combinaison multidispositif prédéfini comprenant une pluralité d'événements.

2. Procédé selon la revendication 1, le procédé comprenant en outre :
la réception, par le premier dispositif, d'un identifiant de dispositif qui est diffusé par le deuxième dispositif, l'identifiant de dispositif du deuxième dispositif représentant une identité du deuxième dispositif, et l'identifiant de dispositif du deuxième dispositif correspondant au deuxième événement natif du deuxième dispositif.

3. Procédé selon la revendication 1 ou 2, le procédé comprenant en outre :
la réception, par le premier dispositif, d'un type d'événement et/ou de coordonnées d'événement qui sont diffusés par le deuxième dispositif, le type d'événement et/ou les coordonnées d'événement du deuxième dispositif correspondant au deuxième événement natif du deuxième dispositif, le type d'événement du deuxième dispositif représentant un mode d'entrée sur le deuxième dispositif, et les coordonnées d'événement du deuxième dispositif représentant des coordonnées correspondant à une entrée sur le deuxième dispositif.

4. Procédé selon l'une quelconque des revendications 1 à 3, le procédé comprenant en outre :
la diffusion, par le premier dispositif, du premier événement natif du premier dispositif.

5. Procédé selon l'une quelconque des revendications 1 à 4, le procédé comprenant en outre :
la diffusion, par le premier dispositif, d'un identifiant de dispositif du premier dispositif, l'identifiant de dispositif du premier dispositif représentant une identité du premier dispositif, et l'identifiant de dispositif du premier dispositif correspondant au premier événement natif du premier dispositif.

6. Procédé selon l'une quelconque des revendications 1 à 5, le procédé comprenant en outre :
la diffusion, par le premier dispositif, d'un type d'événement et/ou de coordonnées d'événement du premier dispositif, le type d'événement et/ou les coordonnées d'événement du premier dispositif correspondant au premier événement natif du premier dispositif, le type d'événement du premier dispositif représentant un mode d'entrée sur le premier dispositif, et les coordonnées d'événement du premier dispositif représentant des coordonnées correspondant à une entrée sur le premier dispositif.

7. Procédé selon l'une quelconque des revendications 1 à 6, le procédé comprenant :
l'obtention, par le deuxième dispositif, d'un deuxième événement natif du deuxième dispositif en réponse à une opération d'entrée effectuée sur le deuxième dispositif ; et
la diffusion, par le deuxième dispositif, du deuxième événement natif du deuxième dispositif.

8. Procédé selon la revendication 7, le procédé comprenant en outre :
la diffusion, par le deuxième dispositif, d'un identifiant de dispositif du deuxième dispositif, l'identifiant de dispositif du deuxième dispositif représentant une identité du deuxième dispositif, et l'identifiant de dispositif du deuxième dispositif correspondant au deuxième événement natif du deuxième dispositif.

9. Procédé selon la revendication 7 ou 8, le procédé comprenant en outre :
la diffusion, par le deuxième dispositif, d'un type d'événement et/ou de coordonnées d'événement du deuxième dispositif, le type d'événement et/ou les coordonnées d'événement du deuxième dispositif correspondant au deuxième événement natif du deuxième dispositif, le type d'événement du deuxième dispositif représentant un mode d'entrée sur le deuxième dispositif, et les coordonnées d'événement du deuxième dispositif représentant des coordonnées correspondant à une entrée sur le deuxième dispositif.

10. Procédé selon l'une quelconque des revendications 7 à 9, le procédé comprenant en outre :
la réception, par le deuxième dispositif, d'un premier événement natif qui est diffusé par un premier dispositif, le premier événement natif du premier dispositif étant généré par une opération d'entrée effectuée sur le premier dispositif, et le premier dispositif et le deuxième dispositif se trouvant dans un même système distribué ;
la virtualisation, par le deuxième dispositif, du premier événement natif du premier dispositif en un événement agent ;
la détermination, par le deuxième dispositif, que le deuxième événement natif et l'événement agent du deuxième dispositif concernent ou non une entrée sur une combinaison multidispositif ;
en cas de détermination que l'entrée est une entrée sur une combinaison multidispositif, la détermination, par le deuxième dispositif, que le deuxième dispositif est ou n'est pas un dispositif d'exécution ; et
en cas de détermination que le deuxième dispositif est un dispositif d'exécution, l'exécution, par le deuxième dispositif, d'un service correspondant à l'événement d'entrée sur une combinaison multidispositif.

11. Procédé selon la revendication 10, dans lequel la détermination, sur la base du deuxième événement natif et de l'événement agent du deuxième dispositif, qu'une entrée est ou n'est pas une entrée sur une combinaison multidispositif comprend :
la mise en correspondance, par le deuxième dispositif, d'une combinaison du deuxième événement natif et de l'événement agent du deuxième dispositif avec un ensemble de scénarios d'entrée sur une combinaison multidispositif prédéfinis, pour déterminer si l'entrée est une entrée sur une combinaison multidispositif, l'ensemble de scénarios d'entrée sur une combinaison multidispositif prédéfinis comprenant un ou plusieurs scénarios d'entrée sur une combinaison multidispositif prédéfinis, et chaque scénario d'entrée sur une combinaison multidispositif prédéfini comprenant une pluralité d'événements.

12. Premier dispositif, comprenant un processeur et une mémoire, la mémoire étant conçue pour stocker un programme informatique, et le processeur étant conçu pour exécuter le programme informatique afin de mettre en œuvre les étapes effectuées par le premier dispositif dans le procédé d'entrée sur un dispositif selon l'une quelconque des revendications 1 à 11.

13. Système d'entrée sur un dispositif, comprenant le premier dispositif selon la revendication 12 et un deuxième dispositif, le deuxième dispositif comprenant un processeur et une mémoire, la mémoire étant conçue pour stocker un programme informatique, et le processeur étant conçu pour exécuter le programme informatique afin de mettre en œuvre les étapes effectuées par le deuxième dispositif dans le procédé d'entrée sur un dispositif selon l'une quelconque des revendications 7 à 11.

14. Support de stockage lisible par ordinateur, le support de stockage lisible par ordinateur stockant un programme informatique, et lorsque le programme informatique est exécuté sur un ordinateur, les étapes effectuées par le premier dispositif dans le procédé d'entrée sur un dispositif selon l'une quelconque des revendications 1 à 11 étant mises en œuvre.
